# EUROPEAN PATENT SPECIFICATION

(11) **EP 2 394 894 B1**
(45) Date of publication and mention of the grant of the patent: **01.06.2016**
(21) Application number: 11169031.9
(22) Date of filing: 08.06.2011
(51) Int. Cl.: B62J 17/02, B62J 33/00

(54) **Saddle-ride type vehicle**
Motorrad
Véhicule à monture de selle

(30) Priority: 11.06.2010 JP 2010134328; 29.09.2010 JP 2010218473
(43) Date of publication of application: 14.12.2011
(73) Proprietor: Yamaha Hatsudoki Kabushiki Kaisha, Iwata-shi, Shizuoka 438-8501 (JP)
(72) Inventor: Suita, Yoshikazu, Iwata-shi, Shizuoka 438-8501 (JP); Kamimura, Kaoru, 10540 Samutprakarn (TH)
(74) Representative: Grünecker Patent- und Rechtsanwälte PartG mbB

(56) References cited:
- EP-A2- 0 021 657
- EP-A2- 1 459 973
- WO-A2-2006/035920
- GB-A- 2 127 363
- JP-A- 2000 280 957
- JP-A- 2004 291 700
- JP-U- S4 942 641
- US-A- 4 519 473
- US-A- 4 703 825
- US-A1- 2005 224 266

## Description

### BACKGROUND OF THE INVENTION

### Field of the Invention

The present invention relates to a saddle-ride type vehicle.

### Background Art

A vehicle body cover is disposed between a handle and a seat in some of the well-known saddle-ride type vehicles such as a motorcycle described in Japan Laid-open Patent Application Publication No. JP-A-2004-291700 . The vehicle body cover is positioned forwards of the seat, while an engine is disposed under the vehicle body cover. The vehicle body cover includes an opening section. A plurality of fins is attached to the opening section. The fins are protruded from the vehicle body cover while being disposed perpendicular to the vehicle body cover.

In the motorcycles of the aforementioned type, the engine is disposed under the vehicle body cover. The air warmed by the heat of the engine flows out of the opening section of the vehicle body cover while the motorcycle travels or stops. The warmed air, blowing out of the opening section, flows upwards and rearwards while being guided by the fins. Simply put, the warmed air, blowing out of the opening section, tends to flow towards a rider sitting on the seat.
Therefore, the warmed air may deteriorate comfortableness of the rider.

The document US 2005/0224266 A1 according to the preamble of claim 1 discloses a motorcycle comprising a mainframe supporting a head pipe and a seat disposed rearwards of the head pipe. An engine is disposed between the head pipe and the seat. A leg shield is provided comprising a first cover member and a third cover member commonly covering a top side of the mainframe. The leg shield further comprises a second cover member for covering at least partially a lateral side of the engine. The second cover member includes a plurality of louvers arranged along a vertical direction for forming outlets.

It is an object of the present invention to inhibit rider's comfortableness from being deteriorated by the warmed air flowing out of the vehicle body cover in a saddle-ride type vehicle. This object is solved by the features of claim 1. Further improvements are laid down in the sub-claims.

### SUMMARY OF THE INVENTION

A saddle-ride type vehicle according to a first aspect of the present invention includes a frame unit supporting a steering unit and a seat disposed rearwards of the steering unit, a drive unit, disposed between the steering unit and the seat, and a vehicle body cover including a top surface section and a lateral surface section. The top surface section is disposed between the steering unit and the seat for covering a top side of the frame unit. The lateral surface section at least partially covers a lateral side of the drive unit. The top surface section of the vehicle body cover includes a plurality of slanted surfaces. Each of the slanted surfaces is slanted for positioning a front portion thereof higher than a rear portion thereof. The slanted surfaces are disposed away from each other along a longitudinal direction of a vehicle body. The slanted surfaces form a single or plurality of air paths between every adjacent two of the slanted surfaces. The single or plurality of the air paths communicate with an inner space enclosed by the vehicle body cover.

The top surface section of the vehicle body cover includes a first blade. The first blade is extended rearwards over the slanted surface.

A saddle-ride type vehicle according to a second aspect of the present invention includes a front wheel, a rear wheel, the drive unit, the steering unit, a head pipe, the frame unit, the seat and the vehicle body cover. The drive unit is disposed between the front wheel and the rear wheel. The steering unit includes a front fork and a handle. The front fork supports the front wheel for allowing the front wheel to rotate. The handle is coupled to a top of the front fork. The head pipe supports the steering unit for allowing the steering unit to rotate. The frame unit is connected to the head pipe while being disposed over the drive unit.

A saddle-ride type vehicle according to a third aspect of the present invention relates to the saddle-ride type vehicle according to the first aspect of the preset invention. In the saddle-ride type vehicle, the lateral surface section includes an opening. The opening is positioned lower than the single or plurality of air paths in a side view of the vehicle body, while communicating with the inner space enclosed by the vehicle body cover.

A saddle-ride type vehicle according to a fourth aspect of the present invention relates to the saddle-ride type vehicle according to the third aspect of the present invention. In the saddle-ride type vehicle, the vehicle body cover includes a guide plate and a second blade. The guide plate is disposed inwards of the opening. The second blade is disposed on an outer surface of the guide plate, while being extended in a vertical direction. A bottom portion of the guide plate is connected to the lateral surface section. A top portion of the guide plate is disposed away from the lateral surface section.

A saddle-ride type vehicle according to a fifth aspect of the present invention relates to the saddle-ride type vehicle according to the third aspect of the present invention. In the saddle-ride type vehicle, the lateral surface section includes a guide portion. The guide portion is disposed rearwards of the opening, while being extended along a transverse direction of the vehicle body.

A saddle-ride type vehicle according to a sixth aspect of the present invention relates to the saddle-ride type vehicle according to the third aspect of the present invention. In the saddle-ride type vehicle, the vehicle body cover includes a third blade. The third blade is disposed across the opening while being extended along the longitudinal direction of the vehicle body.

A saddle-ride type vehicle according to a seventh aspect of the present invention relates to the saddle-ride type vehicle according to the third aspect of the present invention. In the saddle-ride type vehicle, the vehicle body cover includes a first cover component and a second cover component. The second cover component is produced as an individual component separated from the first component. The first cover component includes a guide plate, a second blade and a part of the lateral surface section. The guide plate is disposed inwards of the lateral surface section while being opposed to the opening. A bottom portion of the guide plate is connected to the lateral surface section, whereas a top portion of the guide plate is disposed away from the lateral surface section. The second blade is disposed along a surface of the guide plate, while being extended in a vertical direction. The second cover component includes the third blade and another part of the lateral surface section.

A saddle-ride type vehicle according to a eighth aspect of the present invention relates to the saddle-ride type vehicle according to the third aspect of the present invention. In the saddle-ride type vehicle, the lateral surface section includes a protruded portion. The protruded portion is positioned lower than the opening. The protruded portion is protruded away from a vehicle body center to the outward of the vehicle body cover in a transverse direction of the vehicle body. A bottom surface of the protruded portion is slanted for positioning a rear portion thereof higher than a front portion thereof.

A saddle-ride type vehicle according to an ninth aspect of the present invention relates to the saddle-ride type vehicle according to the first aspect of the present invention. In the saddle-ride type vehicle, the vehicle body cover includes an aperture in a part thereof positioned forwards of the single or plurality of the air paths. The aperture is opened to the forward of the vehicle body, while communicating with the inner space enclosed by the vehicle body cover.

A saddle-ride type vehicle according to a tenth aspect of the present invention relates to the saddle-ride type vehicle according to the first aspect of the present invention. In the saddle-ride type vehicle, the lateral surface section includes a mud flap. The mud flap is protruded downwards from a bottom surface of the lateral surface section while being extended to a position lower than a bottom portion of the drive unit.

A saddle-ride type vehicle according to a eleventh aspect of the present invention relates to the saddle-ride type vehicle according to the first aspect of the present invention. In the saddle-ride type vehicle, the first blade is slanted with respect to the longitudinal direction of the vehicle body for positioning a transversely outward end thereof forwards of a transversely inward end thereof.

A saddle-ride type vehicle according to an twelfth aspect of the present invention relates to the saddle-ride type vehicle according to the first aspect of the present invention. In the saddle-ride type vehicle, the first blade is protruded rearwards from a top end of the slanted surface.

A saddle-ride type vehicle according to a thirteenth aspect of the present invention relates to the saddle-ride type vehicle according to the first aspect of the present invention. The top surface section of the vehicle body cover further includes a single or plurality of blades identical to the first blade. Each of the single or plurality of blades is extended rearwards over each of the slanted surfaces on a one-to-one basis. A given one of the first blade and the blade/blades identical thereto is positioned higher than the other or others of the first blade and the blade/blades identical thereto disposed rearwards of the given one of the first blade and the blade/blades identical thereto.

A saddle-ride type vehicle according to a fourteenth aspect of the present invention relates to the saddle-ride type vehicle according to the first aspect of the present invention. In the saddle-ride type vehicle, an outlet of each of the single or plurality of the air paths to the outside of the vehicle body cover is disposed closer to transversely outward ends of the slanted surfaces than to transversely inward ends of the slanted surfaces.

### <Advantageous Effects of Invention>

According to the saddle-ride type vehicle of the first aspect of the present invention, the air in the inner space enclosed by the vehicle body cover flows to the outside through the air path/paths. Each of the slanted surfaces forming the air path/paths is slanted for positioning the front portion thereof higher than the rear portion thereof. Therefore, the air flows upwards and forwards along the slanted surfaces. The first blade is extended rearwards from a given one of the slanted surfaces. Therefore, the airflow along the slanted surfaces is disturbed by the first blade. Accordingly, the warmed air flowing out of the air path/paths can be prevented from easily flowing towards a rider seating rearwards of the vehicle body cover. Consequently, it is possible to inhibit rider's comfortableness from being deteriorated by the warmed air flowing out of the vehicle body cover.

According to the saddle-ride type vehicle of the third aspect of the present invention, air flows out of the opening of the lateral surface section as well as the air path/paths of the top surface section in the vehicle body cover. Therefore, the warmed air in the inner space enclosed by the vehicle body cover is easily discharged to the outside. Accordingly, it is possible to enhance a ventilation performance within the inner space enclosed by the vehicle body cover.

According to the saddle-ride type vehicle of the fourth aspect of the present invention, the air in the inner space enclosed by the vehicle body cover flows through the clearance between the top portion of the guide plate and the lateral surface section, then flows downwards while being guided by the guide plate and the second blade, and is discharged to the outside through the opening. Therefore, it is easy to outwardly discharge the air flowing from the above of the opening within the inner space enclosed by the vehicle body cover. Therefore, the warmed air, remaining without being discharged from the air path/paths of the top surface section, can be easily discharged to the outside through the opening.

According to the saddle-ride type vehicle of the fifth aspect of the present invention, the air flowing out of the opening is guided by the guide portion in the transverse direction of the vehicle body. Accordingly, the warmed air can be inhibited from flowing towards a rider.

According to the saddle-ride type vehicle of the sixth aspect of the present invention, the air flowing outside the vehicle body cover is guided by the third blade in a direction different from the direction of the air flowing out of the opening. Accordingly, it is possible to diffuse the warmed air flowing out of the opening. Therefore, the warmed air can be inhibited from flowing towards a rider.

According to the saddle-ride type vehicle of the seventh aspect of the present invention, the second blade and the third blade are included in separate individual components. Therefore, it is possible to easily form the complexly shaped vehicle body cover including the blades.

According to the saddle-ride type vehicle of the eighth aspect of the present invention, the air flowing out of the opening is guided by the top surface of the protruded portion. Accordingly, the warmed air flowing out of the opening can be inhibited from flowing towards a rider. Further, mud splashed from the ground is guided by the bottom surface of the protruded portion. Therefore, it is possible to inhibit mud from attaching to the vehicle body or rider's feet.

According to the saddle-ride type vehicle of the ninth aspect of the present invention, air flows into the inner space enclosed by the vehicle body cover through the aperture. A part of the air flowing into the inner space flows to the outside through the air path/paths of the top surface section. On the other hand, another part of the air flowing into the inner space flows downwards and then flows to the outside through the opening. Accordingly, it is possible to further enhance a ventilation performance within the inner space enclosed by the vehicle body cover.

According to the saddle-ride type vehicle of the tenth aspect of the present invention, the mud flap can inhibit mud from attaching to the drive unit.

According to the saddle-ride type vehicle of the eleventh aspect of the present invention, the air flowing outside the vehicle body cover can be guided by the first blade. Therefore, the flow of the warmed air flowing out of the air path/paths can be diffused by the flow of the outside air guided by the first blade. Accordingly, the warmed air can be inhibited from flowing toward a rider.

According to the saddle-ride type vehicle of the twelfth aspect of the present invention, the airflow along the slanted surfaces can be more effectively disturbed by the first blade. Accordingly, the warmed air flowing out of the air path/paths can be further prevented from easily flowing towards a rider seated rearwards of the vehicle body cover.

According to the saddle-ride type vehicle of the thirteenth aspect of the present invention, the flow of the warmed air flowing out of the air paths is more effectively diffused by the flow of the outside air guided by the first blade and the blade/blades. Accordingly, the warmed air can be further inhibited from flowing towards a rider.

According to the saddle-ride type vehicle of the fourteenth aspect of the present invention, the outlet of each of the single or plurality of the air paths to the outside of the vehicle body cover is disposed closer to transversely outward ends of the slanted surfaces than to transversely inward ends of the slanted surfaces. Therefore, the warmed air flowing out of the air path/paths can be further prevented from easily flowing towards a rider seated rearwards of the vehicle body cover.

### BRIEF DESCRIPTION OF THE DRAWINGS

Referring now to the attached drawings which form a part of this original disclosure:
FIG. 1 is a left side view of a saddle-ride type vehicle according to an exemplary embodiment of the present invention;
FIG. 2 is a front view of the saddle-ride type vehicle;
FIG. 3 is an exploded perspective view of a vehicle body cover of the saddle-ride type vehicle;
FIG. 4 is an enlarged view of a top surface section of the vehicle body cover;
FIG. 5 is a schematic cross-sectional view of the top surface section sectioned along a line V-V in FIG. 4;
FIG. 6 is a side view of the vehicle body cover;
FIG. 7 is an enlarged view of a left lateral surface opening section of the vehicle body cover;
FIG. 8 is a schematic cross-sectional view of the left lateral surface opening section sectioned along a line VIII-VIII in FIG. 7;
FIG. 9 is a right side view of the saddle-ride type vehicle;
FIG. 10 is a cross-sectional view of first blades and slanted surfaces according to another exemplary embodiment; and
FIG. 11 is a cross-sectional view of first blades and slanted surfaces according to yet another exemplary embodiment.

### DETAILED DESCRIPTION OF THE EMBODIMENTS

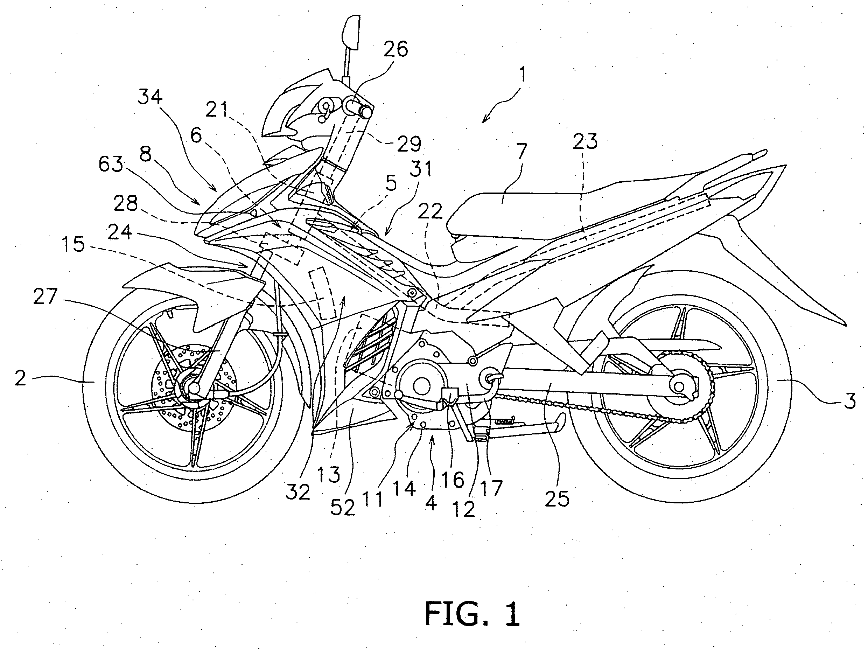

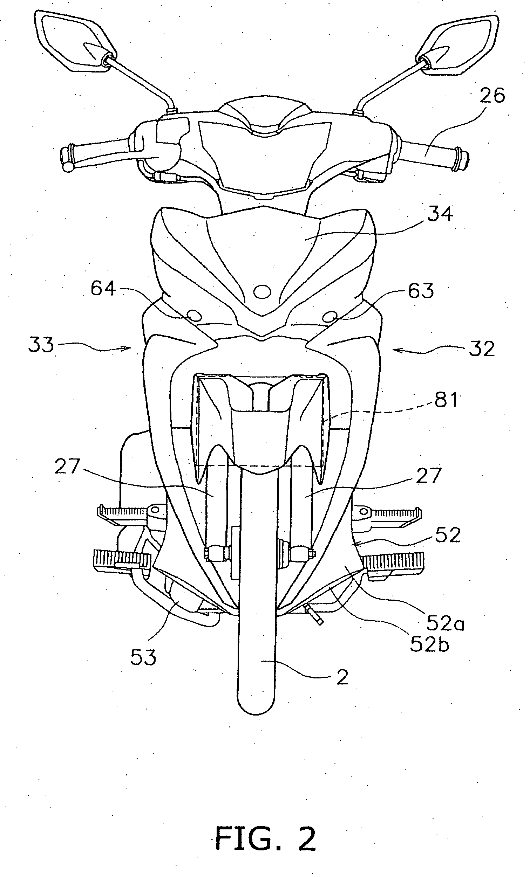

An exemplary embodiment of the present invention will be hereinafter explained with reference to figures. FIG. 1 is a side view of a saddle-ride type vehicle 1 according to the exemplary embodiment of the present invention. FIG. 2 is a front view of the saddle-ride type vehicle 1. The saddle-ride type vehicle 1 is so called a moped. In the saddle-ride type vehicle 1, a downwardly recessed shape is produced for a section interposed between a seat 7 to be described and a steering section 6 to be described in a longitudinal (back-and-forth) direction of a vehicle body. It should be noted that directional terms such as "front", "rear", "right" and "left" and their related terms refer to directions seen from a rider seated on the seat 7 of the saddle-ride type vehicle 1 in the following explanation unless otherwise specified. Further, the term "lateral" and its related terms refer to a direction separated away from the vehicle body center in a transverse (width/right-and-left) direction of the vehicle. As illustrated in FIG. 1, the saddle-ride type vehicle 1 includes a front wheel 2, a rear wheel 3, a drive unit 4, a vehicle body frame 5, the steering unit 6, the seat 7, a vehicle body cover 8 and the like.

The drive unit 4 is longitudinally disposed between the front wheel 2 and the rear wheel 3 while being supported by the vehicle body frame 5. The drive unit 4 includes an engine 11 and a transmission 12. The engine 11 is a water-cooled engine including a cylinder unit 13 and a crankcase 14. The cylinder unit 13 is disposed on the front side of the crankcase 14. The cylinder unit 13 is disposed at a slanted posture for positioning the front portion thereof higher than the rear portion thereof. Further, a radiator 15 is disposed forwards of the cylinder unit 13. The transmission 12 is integrally disposed behind the crankcase 14. The transmission 12 is configured to transmit the drive force from the engine 11 to the rear wheel 3 through a chain. Steps 16 and a change pedal 17 are disposed lateral to the transmission 12. A rider puts his/her feet on the steps 16 and shifts up/down gears of the transmission 12 by operating the change pedal 17 with his/her foot.

The vehicle body frame 5 includes a head pipe 21, a main frame 22 and a rear frame 23. The head pipe 21 supports the steering unit 6 for allowing it to rotate. Specifically, the head pipe 21 supports a front fork 24 to be described for allowing it to rotate. The main frame 22 corresponds to "a frame unit" of the present invention. The main frame 22 is connected to the head pipe 21 while being extended therefrom obliquely rearwards and downwards. The main frame 22 is disposed over the drive unit 4. A rear arm 25 is pivotably attached to the rear portion of the main frame 22 through a bracket (not illustrated in the figure). The rear arm 25 supports the rear wheel 3 for allowing it to rotate. The rear frame 23 is connected to the main frame 22 while being extended therefrom obliquely rearwards and upwards. The rear frame 23 is disposed over the rear wheel 3. The seat 7 is disposed over the rear frame 23 while being supported by the rear frame 23.

The steering unit 6 includes the front fork 24 and a handle 26. The front fork 24 supports the front wheel 2 for allowing it to rotate. Specifically, the front fork 24 includes a pair of front suspensions 27, a bracket 28 and a steering shaft 29. The front suspensions 27 are disposed away from each other in the transverse direction of the vehicle. The front suspensions 27 support the front wheel 2 for allowing it to rotate. The tops of the front suspensions 27 are attached to the bracket 28. The bracket 28 is attached to the bottom of the steering shaft 29. The steering shaft 29 is rotatably inserted into the head pipe 21. The handle 26 is coupled to the top of the steering shaft 29. In other words, the handle 26 is coupled to the top of the front fork 24.

The seat 7 is disposed over the rear frame 23. The seat 7 is disposed rearwards of the steering unit 6 while being separated away from the steering unit 6.

The vehicle body cover 8 is a resin member covering the vehicle body frame 5. The vehicle body cover 8 includes a top surface section 31, a pair of a lateral surface section 32 and a lateral surface section 33 (see FIG. 2), and a front surface section 34.

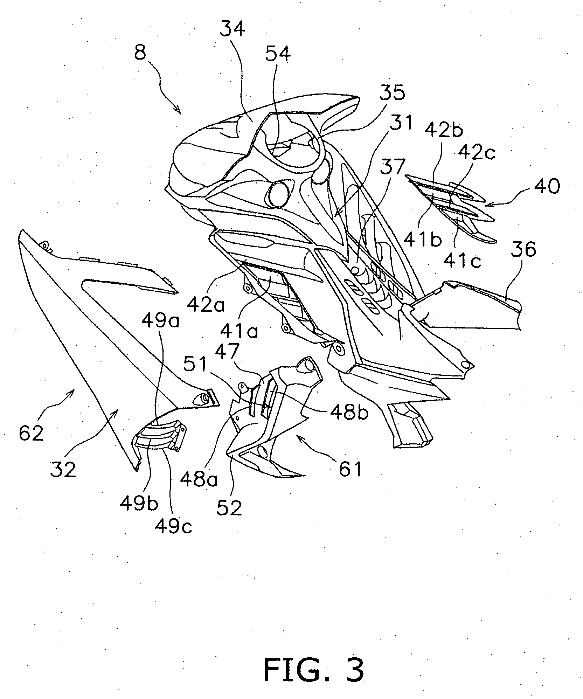

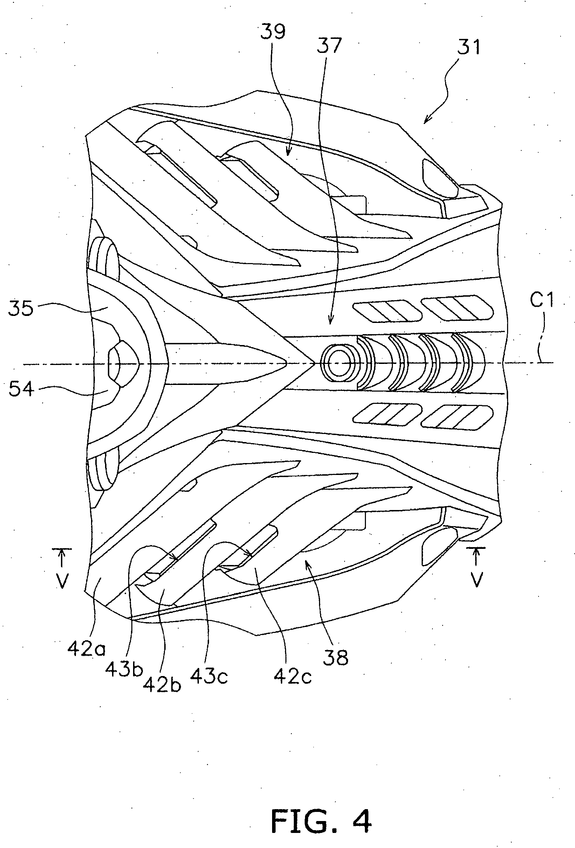

The top surface section 31 is longitudinally disposed between the steering unit 6 and the seat 7 for covering the top side of the main frame 22. The surface of the top surface section 31 is slanted for positioning the front portion thereof higher than the rear portion thereof. FIG. 3 illustrates a perspective view of the vehicle body cover 8. It should be noted that FIG. 3 illustrates the vehicle body cover 8 that some components are detached therefrom. As illustrated in FIG. 3, the top surface section 31 includes a front protruded portion 35 on the front portion thereof. The front protruded portion 35 is positioned in the center of the top surface section 31 in the transverse direction of the vehicle. The front protruded portion 35 includes an opening 54 for inserting the aforementioned steering shaft 29 therein. The top surface section 31 includes a rear bent portion 36 on the rear portion thereof. The rear bent portion 36 is upwardly bent. The rear bent portion 36 is disposed under the front portion of the seat 7. A top surface center portion 37 is longitudinally disposed between the front protruded portion 35 and the rear bent portion 36. The top surface center portion 37 is disposed in the center of the top surface section 31 in the transverse direction of the vehicle. The top surface center portion 37 is longitudinally extended while being connected to both the front protruded portion 35 and the rear bent portion 36. The aforementioned main frame 22 is disposed under the top surface center portion 37. FIG. 4 illustrates an enlarged partial top view of the top surface section 31. In the top surface section 31, a left top surface opening portion 38 and a right top surface opening portion 39 are disposed on the both lateral sides of the top surface center portion 37. The left and right top surface opening portions 38 and 39 are separated away from each other in the transverse direction of the vehicle. The structure of the left top surface opening portion 38 is bilaterally symmetrical to that of the right top surface opening portion 39. The structure of the left top surface opening portion 38 will be hereinafter explained.

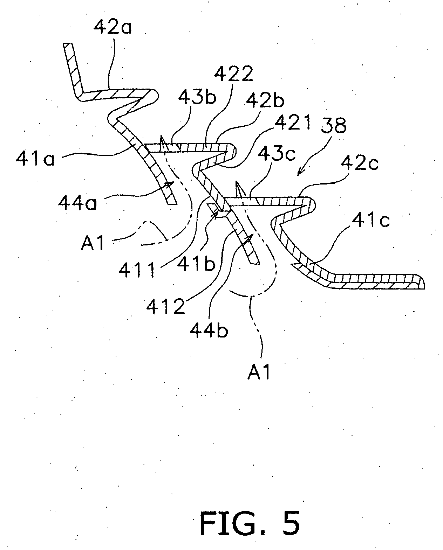

FIG. 5 is a schematic cross-sectional view of the left top surface opening portion 38. The left top surface opening portion 38 includes a plurality of slanted surfaces 41a to 41c and a plurality of first blades 42a to 42c.

The slanted surfaces 41a to 41c are slanted in the same direction as the surface of the top surface section 31. In other words, each of the slanted surfaces 41a to 41c is slanted for positioning the front portion thereof higher than the rear portion thereof. The slanted surfaces 41a to 41c are disposed away from each other at predetermined intervals in the longitudinal direction of the vehicle. Two pairs of adjacent slanted surfaces among the slanted surfaces 41a to 41c form air paths 44a and 44b communicating with the inside of the vehicle body cover 8. Specifically, the air path 44a is formed by the slanted surfaces 41a and 41b. Further, the air path 44b is formed by the slanted surfaces 41b and 41c. As to the slanted surfaces 41a to 41c, a given one is positioned higher than the other/others disposed rearwards of the given one. The bottom end of each slanted surface is disposed for vertically (up-and-down directionally) overlapping with the slanted surface backwardly adjacent thereto. Specifically, the bottom end of the forefront slanted surface 41a is disposed for vertically overlapping with the slanted surface 41b positioned rearwards thereof. Further, the bottom end of the slanted surface 41b is disposed for vertically overlapping with the slanted surface 41c positioned rearwards thereof. In other words, the bottom end of the forefront slanted surface 41a is positioned higher than the bottom end of the slanted surface 41b positioned rearwards thereof. In addition, the bottom end of the slanted surface 41a is positioned lower than the top end of the first blade 42b positioned rearwards thereof. Further, the bottom end of the slanted surface 41b is positioned higher than the bottom end of the slanted surface 41c positioned rearwards thereof. In addition, the bottom end of the slanted surface 41b is positioned lower than the top end of the first blade 42c positioned rearwards thereof.

Each of the first blades 42a to 42c is protruded from a corresponding one of the slanted surfaces 41a to 41c. Each of the first blades 42a to 42c is connected to the top end of a corresponding one of the slanted surfaces 41a to 41c while being protruded therefrom to the rearward. Each of the first blades 42a to 42c is backwardly extended over a corresponding one of the slanted surfaces 41a to 41c. In other words, the first blades 42a to 42c are disposed for blocking the air flowing along the slanted surfaces 41a to 41c through the air paths 44a and 44b. It should be noted that each of the first blades 42a to 42c includes a first portion and a second portion. The first portion is extended rearwards from each of the slanted surfaces 41a to 41c, whereas the second portion is extended forwards from the rear end of the first portion. For example, the first blade 42b includes a first portion 421 and a second portion 422. The first portion 421 is extended rearwards from the slanted surface 41b, whereas the second portion 422 is extended forwards from the rear end of the first portion 421. The structures of the first blades 42a and 42c are roughly the same as the structure of the first blade 42b. As to the first blades 42a to 42c, a given one is positioned higher than the other/others disposed rearwards of the given one. Further, each of the first blades 42a to 42c is slanted with respect to the longitudinal direction of the vehicle for positioning the transversely outward end thereof forwards of the transversely inward end thereof, as illustrated in FIG. 4. In other words, each of the first blades 42a to 42c is slanted with respect to the longitudinal direction of the vehicle for positioning the rear portion thereof closer to the vehicle body center in the transverse direction of the vehicle (see a dashed dotted line C1) than the front portion thereof to be. It should be noted that the term "transversely inward" refers to a direction getting closer to the vehicle body center C1 in the transverse direction of the vehicle. On the other hand, the term "transversely outward" refers to a direction separated away from the vehicle body center C1 in the transverse direction of the vehicle. As to the first blades 42a to 42c, a given one has a transverse dimension greater than that of the other/others disposed rearwards of the given one. Further, the first blades 42a to 42c are partially recessed. Specifically, the rear side blades of the first blades 42a to 42c, i.e., the first blades 42b and 42c have recesses 43b and 43c on the front ends thereof, as illustrated in FIGS. 4 and 5. Each of the recesses 43b and 43c is recessed rearwards. The recess 43b is disposed closer to the transversely outward end than to the transversely inward end in the first blade 42b, whereas the recess 43c is disposed closer to the transversely outward end than to the transversely inward end in the first blade 42c. The air path 44a communicates with the outer space through the recess 43b, whereas the air path 44b communicates with the outer space through the recess 43c. In other words, each of the recesses 43b and 43c, i.e., the outlet of each of the air paths 44a and 44b to the outside, is disposed closer to the transversely outward end than to the transversely inward end in the slanted surfaces 41a to 41c. The rear end of the first blade 42a is positioned forwards of the rear end of the recess 43b. Similarly, the rear end of the first blade 42b is positioned forwards of the rear end of the recess 43c. In other words, the rear end of the first blade 42a is positioned forwards of the rear edge of the outlet of the air path 44a, whereas the rear end of the first blade 42b is positioned forwards of the rear edge of the outlet of the air path 44b.

As illustrated in FIG. 3, a part of the first blades 42a to 42c and a part of the slanted surfaces 41a to 41c are produced as individual components separated from the remaining part of the top surface section 31 (hereinafter referred to as "the main body of the top surface section 31"). Specifically, a component 40, including the rear side first blades 42b and 42c, a part of the slanted surface 41b, and the slanted surface 41c, is provided as an individual component separated from the main body of the top surface section 31. In other words, the component 40 is produced as an individual component separated from the main body of the top surface section 31 and includes a part of the plural first blades 42a to 42c and the plural slanted surfaces 41a to 41c. The component 40 is attached to the main body of the top surface section 31 while being disposed over the main body of the top surface section 31. Specifically, the component 40 includes the first blades 42b and 42c provided with the aforementioned recesses 43b and 43c. It should be noted that the slanted surface 41b is formed by a top portion 411 included in the component 40 and a bottom portion 412 included in the main body of the top surface section 31, as illustrated in FIG. 5. The component 40 is fixed to the main body of the top surface section 31 by fixation means such as screws or a fitting structure.

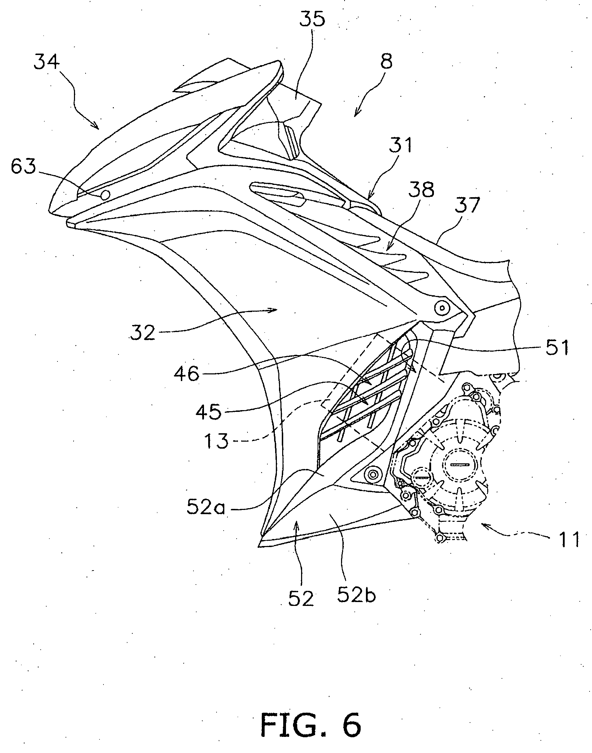

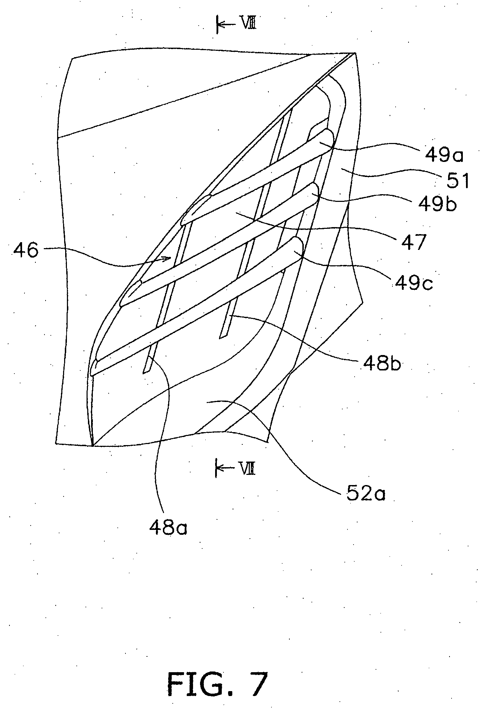

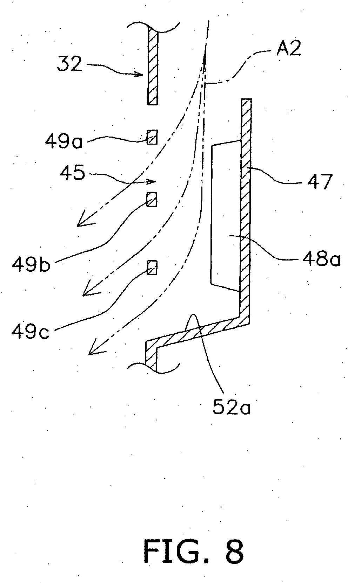

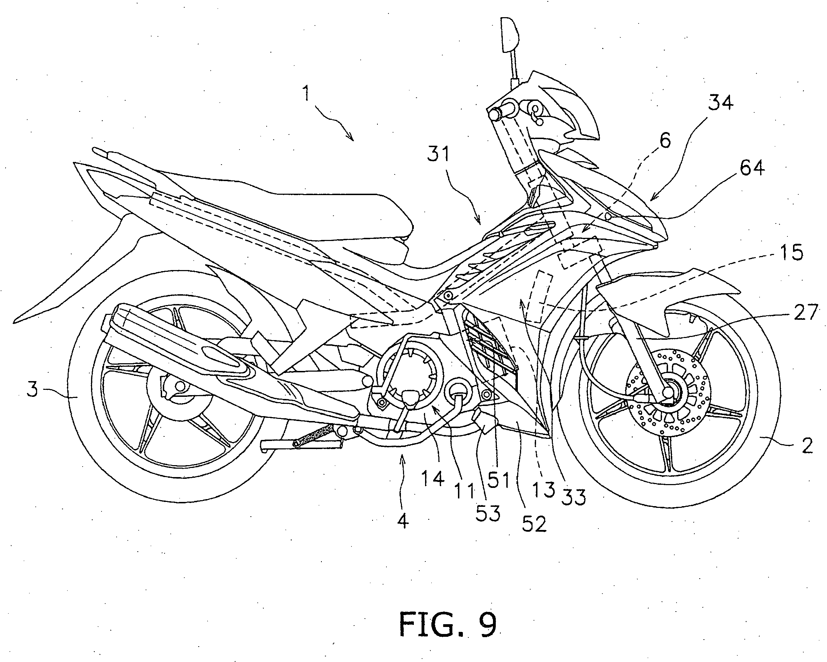

As illustrated in FIGS. 1 and 9, a pair of the lateral surface sections 32 and 33 (hereinafter referred to as "a right lateral surface section 33" and "a left lateral surface section 32") at least partially covers the both lateral sides of the drive unit 4. As illustrated in FIG. 1, the left lateral surface section 32 covers the left sides of the cylinder unit 13 of the engine 11, the steering unit 6, the radiator 15 and the like. As illustrated in FIG. 9, the right lateral surface section 33 covers the right sides of the cylinder unit 13 of the engine 11, the steering unit 6, the radiator 15 and the like. FIG. 6 illustrates a side view of the vehicle body cover 8. In the side view, the front portion of the left lateral surface section 32 has a curved shape recessed rearwards. The top portion of the left lateral surface section 32 is connected to both the top surface section 31 and the front surface section 34. Further, the left lateral surface section 32 includes an opening 45 and a left lateral surface opening section 46. The opening 45 communicates with the inside of the vehicle body cover 8. In the side view of the vehicle body, the opening 45 is positioned lower than the aforementioned air paths 44a and 44b. The cylinder unit 13 of the engine 11 is positioned inwards of the opening 45. FIG. 7 illustrates an enlarged view of the left lateral surface opening section 46. The left lateral surface opening section 46 includes a guide plate 47, second blades 48a and 48b and third blades 49a to 49c. FIG. 8 illustrates a schematic cross-sectional view of the left lateral surface opening section 46 sectioned along a line VIII-VIII in FIG. 7.

The guide plate 47 is disposed inwards of the opening 45. In other words, the guide plate 47 is disposed inwards of the left lateral surface section 32 while being opposed to the opening 45. The bottom and rear portions of the guide plate 47 are connected to the left lateral surface section 32. The top and front portions of the guide plate 47 are opened in the inward of the lateral surface sections 32, while being disposed away from the left lateral surface section 32 at a predetermined interval. Therefore, the air in the inside of the vehicle body cover 8 is allowed to flow from the top and front sides of the guide plate 47 to the outside of the vehicle body cover 8 through the lateral side of the guide plate 47 and the opening 45 (see arrows A2 depicted with dashed two-dotted lines in FIG. 8).

The second blades 48a and 48b are disposed on the outer surface of the guide plate 47 while being laterally protruded therefrom. The second blades 48a and 48b are disposed across the opening 45 in the vertical direction. The second blades 48a and 48b are plate-like members extended in the vertical direction. Specifically, the second blades 48a and 48b are slanted with respect to the vertical direction for positioning the bottom portion thereof to be positioned forwards of the top portion thereof.

The third blades 49a to 49c are disposed across the opening 45 in the longitudinal direction. In the side view, the third blades 49a to 49c are disposed for intersecting with the second blades 48a and 48b, while being disposed lateral to the second blades 48a and 48b. The third blades 49a to 49c are extended in the longitudinal direction of the vehicle body. Specifically, the third blades 49a to 49c are slanted with respect to the longitudinal direction of the vehicle body for positioning the rear portion thereof higher than the front portion thereof.

Further, the left lateral surface section 32 includes a guide portion 51 and a protruded portion 52, as illustrated in FIG. 6. The guide portion 51 is disposed rearwards of the opening 45 while being disposed along the rear edge of the opening 45. The guide portion 51 is extended from the rear edge of the opening 45 in the transverse direction of the vehicle for guiding the air flowing out of the opening 45 in the transverse direction of the vehicle. The protruded portion 52 is positioned lower than the opening 45. The protruded portion 52 is protruded away from the vehicle body center to the outward of the vehicle body cover 8 in the transverse direction of the vehicle. The protruded portion 52 is positioned at roughly the same height as the aforementioned steps 16 and the aforementioned change pedal 17 (see FIG. 1). A top surface 52a of the protruded portion 52 is slanted for positioning the rear portion thereof higher than the front portion thereof. Similarly, a bottom surface 52b of the protruded portion 52 is slanted for positioning the rear portion thereof higher than the front portion thereof. Further, the bottom surface 52b of the protruded portion 52 is slanted for setting a portion thereof positioned furthest from the vehicle body center to be positioned higher than a portion thereof positioned closer to the vehicle body center in the transverse direction of the vehicle.

As illustrated in FIG. 3, the vehicle body cover 8 includes a first cover component 61 and a second cover component 62. The first and second cover components 61 and 62 are produced as separate individual components. The left lateral surface section 32 is formed by the first and second cover components 61 and 62. In other words, the left lateral surface section 32 can be divided into the first and second cover components 61 and 62 at the opening 45 as the boundary therebetween.

The first cover component 61 mainly forms the bottom portion of the left lateral surface section 32. The first cover component 61 includes the aforementioned guide plate 47 and the aforementioned second blades 48a and 48b. Further, the first cover component 61 includes a part of the left lateral surface section 32 including the aforementioned guide portion 51, the aforementioned protruded portion 52 and the like. On the other hand, the second cover component 62 mainly forms the top portion of the left lateral surface section 32. The second cover component 62 includes the aforementioned third blades 49a to 49c and the remaining part of the left lateral surface section 32.

The front surface section 34 covers the front side of the head pipe 21. As illustrated in FIGS. 2 and 6, the front surface section 34 includes a pair of apertures 63 and 64. In other words, the apertures 63 and 64 are disposed in the vehicle body cover 8 while being positioned forwards of the air paths 44a and 44b. The apertures 63 and 64 are separated away from each other in the transverse direction of the vehicle while being disposed bilaterally symmetric to each other. Further, the apertures 63 and 64 are disposed closer to the tops of the right and left lateral surface sections 33 and 32. The apertures 63 and 64 are opened to the forward of the vehicle body, while communicating with the inside of the vehicle body cover 8. Further, the vehicle body cover 8 includes an opening 81 in a portion thereof positioned forwards of the radiator 15, as illustrated in FIG. 2. The opening 81 is positioned rearwards of the front wheel 2.

It should be noted that the right lateral surface section 33 has roughly the same structure as the left lateral surface section 32. Similarly to the lateral surface section 32, the right lateral surface section 33 includes the guide portion 51 and the protruded portion 52, as illustrated in FIG. 9. Further, the right lateral surface section 33 includes a mud flap 53. The mud flap 53 is downwardly protruded from the bottom surface of the right lateral surface section 33. Specifically, the mud flap 53 is downwardly protruded from the rear portion of the bottom surface of the protruded portion 52. In the side view, the mud flap 53 is positioned forwards of the crankcase 14 of the engine 11. The mud flap 53 is extended to a position lower than the bottom of the engine 11.

While the saddle-ride type vehicle 1 travels, the outside air flows into the inside of the vehicle body cover 8 through the apertures 63 and 64 of the front surface section 34. Further, the outside air flows into the inside of the vehicle body cover 8 through the opening 81 of the vehicle body cover 8. A part of the air flowing into the inside of the vehicle body cover 8 flows to the outside through the air paths 44a and 44b of the top surface section 31. Further, another part of the air flowing into the inside of the vehicle body cover 8 flows downwards and then flows to the outside through the opening 45. While the saddle-ride type vehicle 1 stops, by contrast, the warmed air flows up through the inside of the vehicle body cover 8. The warmed air subsequently flows to the outside through the air paths 44a and 44b of the top surface section 31.

The saddle-ride type vehicle 1 of the present exemplary embodiment of the present invention has the following features.

In the saddle-ride type vehicle 1, air flows from the inside of the vehicle body cover 8 to the outside through the air paths 44a and 44b (see arrows A1 depicted with dashed two-dotted lines in FIG. 5). In this case, the air flows upwards and forwards along the slanted surfaces 41a to 41c of the left top surface opening portion 38. Further, each of the first blades 42a to 42c is disposed for extending rearwards from a corresponding one of the slanted surfaces 41a to 41c. Therefore, the first blades 42a to 42c disturb the air flowing along the slanted surfaces 41a to 41c. The warmed air, flowing out of the air paths 44a and 44b, is thereby prevented from easily flowing towards a rider seated rearwards of the top surface section 31. The air flowing out of the right top surface opening portion 39 is similar to the air flowing out of the left top surface opening portion 38. It is thus possible to inhibit deterioration of rider's comfortableness.

Air flows out of the opening 45 of the left lateral surface section 32 as well as the air paths 44a and 44b of the top surface section 31 in the vehicle body cover 8. Therefore, the warmed air in the inside of the vehicle body cover 8 is easily discharged to the outside. In other words, temperature elevation can be inhibited within the inside of the vehicle body cover 8. As a result, it is possible to inhibit temperature elevation of the air flowing out of the air paths 44a and 44b of the top surface section 31. Accordingly, it is possible to further inhibit deterioration of rider's comfortableness. In the saddle-ride type vehicle 1 of the present exemplary embodiment, the right lateral surface section 33 has roughly the same structure as that of the left lateral surface section 32. Therefore, the right lateral surface section 33 has roughly the same features as those of the left lateral surface section 32.

The air in the inside of the vehicle body cover 8 flows through the clearance between the top portion of the guide plate 47 and the left lateral surface section 32, then flows downwards while being guided by the guide plate 47 and the second blades 48a and 48b, and is discharged to the outside through the opening 45 (see the arrows A2 depicted with the dashed two-dotted lines in FIG. 8). It is thereby easy to outwardly discharge the air flowing from the above of the opening 45 within the inside of the vehicle body cover 8. Therefore, it is possible to further inhibit temperature elevation of the air flowing out of the air paths 44a and 44b of the top surface section 31. Accordingly, it is possible to further inhibit deterioration of rider's comfortableness.

The air flowing out of the opening 45 is guided by the guide portion 51 along the transverse direction of the vehicle. Accordingly, the warmed air can be inhibited from flowing towards a rider.

The air outside the vehicle body cover 8 is guided by the third blades 49a to 49c along a direction different from the direction of the air flowing out of the opening 45. Accordingly, the warmed air flowing out of the opening 45 is diffused by the flow of the outside air guided by the third blades 49a to 49c. Therefore, the warmed air flowing out of the opening 45 is prevented from easily flowing towards a rider.

The second blades 48a and 48b and the third blades 49a to 49c are respectively included in separate individual components. It is thereby possible to easily produce the aforementioned complexly shaped vehicle body cover.

The air flowing out of the opening 45 is guided by the top surface 52a of the protruded portion 52. The warmed air flowing out of the opening 45 can be thereby inhibited from flowing towards a rider. Further, mud splashed from the ground is guided by the bottom surface 52b of the protruded portion 52. The splashed mud is thereby inhibited from attaching to the engine 11 and rider's feet.

While the saddle-ride type vehicle 1 travels, air flows into the inside of the vehicle body cover 8 through the apertures 63 and 64 of the front surface section 34. Further, air flows into the inside of the vehicle body cover 8 from the bottom side of the vehicle body cover 8. A part of the air flowing into the inside of the vehicle body cover 8 flows to the outside through the air paths 44a and 44b of the top surface section 31. On the other hand, another part of the air flowing into the inside of the vehicle body cover 8 flows downwards and then flows to the outside from the opening 45. It is thereby possible to enhance a ventilation performance within the inside of the vehicle body cover 8. Consequently, it is possible to enhance a cooling performance for the radiator 15.

The mud flap 53 is extended to a position lower than the bottom of the engine 11. Therefore, the mud flap 53 can inhibit attachment of mud to the engine 11 and rider's feet.

The air flowing outside the vehicle body cover 8 is guided by the first blades 42a to 42c. Therefore, the flow of the warmed air flowing out of the air paths 44a and 44b is diffused by the flow of the outside air guided by the first blades 42a to 42c. Accordingly, the warmed air can be inhibited from flowing towards a rider.

Each of the first blades 42a to 42c is protruded rearwards from the top end of a corresponding one of the slanted surfaces 41a to 41c. Therefore, the airflow along the slanted surfaces 41a to 41c can be more effectively disturbed by the first blades 42a to 42c. Accordingly, the warmed air flowing out of the air paths 44a and 44b can be further prevented from easily flowing towards a rider seated rearwards of the vehicle body cover 8.

As to the first blades 42a to 42c, a given one is positioned higher than the other/others disposed rearwards of the given one. Therefore, the flow of the warmed air flowing out of the air paths 44a and 44b is more effectively diffused by the flow of the outside air guided by the first blades 42a to 42c. Accordingly, the warmed air can be further inhibited from flowing towards a rider.

As illustrated in FIG. 5, the recesses 43b and 43c are disposed in higher positions within the air paths 44a and 44b. Therefore, the warmed air easily gathers in the recesses 43b and 43c. Further, the recesses 43b and 43c are disposed closer to the transversely outward end than to the transversely inward end in the slanted surfaces 41a to 41c. Therefore, it is further possible to inhibit the warmed air, flowing out of the recesses 43b and 43c through the air paths 44a and 44b, from flowing towards a rider.

An exemplary embodiment of the present invention has been described above. However, the present invention may not be limited to the aforementioned exemplary embodiment and a variety of changes can be made for the present invention without departing from the scope of the present invention. For example, the detailed shape of the vehicle body cover 8 may not be limited to the aforementioned shape.

Further, the components forming the vehicle body cover 8 may not be necessarily divided in the aforementioned configuration.

The number of the first blades 42a to 42c and the number of the slanted surfaces 41a to 41c may not be necessarily limited to the aforementioned configurations. For example, only one first blade may be provided. In this case, the first blade is extended rearwards from a slanted surface, which is positioned forwards of an air path, of a plurality of slanted surfaces. In FIG. 5, for instance, the first blade may be extended rearwards from either the slanted surface 41a positioned forwards of the air path 44a or the slanted surface 41b positioned forwards of the air path 44b. Similarly, the number of the second blades 48a and 48b and the number of the third blades 49a to 49c may not be necessarily limited to the aforementioned configurations. Further, the apertures 63 and 64 may be disposed in any suitable portions of the vehicle body cover 8 different from the front surface section 34 as long as they are disposed in the vehicle body cover 8 and positioned forwards of the air paths 44a and 44b. Yet further, the mud flap 53 may not be necessarily provided to the right lateral surface section 33, and may be provided to the left lateral surface section 32.

In the aforementioned exemplary embodiment, the main frame 22 is disposed over the drive unit 4. Another member may be herein interposed between the main frame 22 and the drive unit 4. Simply put, the frame unit is disposed over the drive unit in the present invention. Another member may be herein interposed between the frame unit and the drive unit.

In the aforementioned exemplary embodiment, the component 40, including the first blades 42b and 42c and the slanted surfaces 41b and 41c, is provided as an individual component separated from the remaining part of the top surface section 31. However, the first blades 42b and 42c and the slanted surfaces 41b and 41c may be integrally formed with the main body of the top surface section 31 similarly to the other first blade 42a and the other slanted surface 41a.

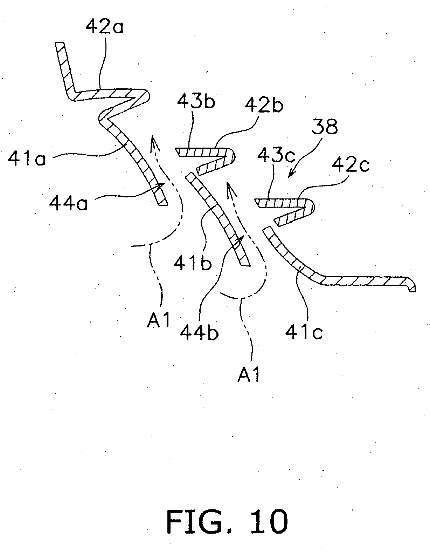

In the aforementioned exemplary embodiment, each of the first blades 42a to 42c is integrally formed with a corresponding one of the slanted surfaces 41a to 41c. However, each of the first blades 42a to 42c may be provided as an individual component separated from a corresponding one of the slanted surfaces 41a to 41c. As illustrated in FIG. 10, for instance, the first blade 42b may be disposed separately away from the slanted surface 41b, whereas the first blade 42c may be disposed separately away from the slanted surface 41c.

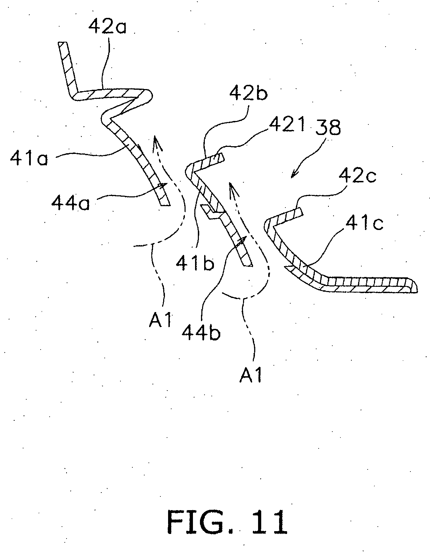

In the aforementioned exemplary embodiment, each of the first blades 42a to 42c includes a first portion and a second portion. The first portion is extended rearwards from each of the slanted surfaces 41a to 41c, whereas the second portion is extended forwards from the rear end of the first portion. However, each of the first blades 42a to 42c is only required to include at least the first portion. As illustrated in FIG. 11, for instance, each of the first blades 42b and 42c may be formed by the first portion 421 without including a second portion. Further, the first blade 42c of the plural first blades 42a to 42c may not be necessarily provided. In other words, it is not necessary to provide a blade extended rearwards from rearmost one of the slanted surfaces forming air paths.

The present invention has been described in connection to a moped. However, the invention can be applied to other straddle-type vehicles, such as trikes or squads.

## Claims

1. A saddle-ride type vehicle, comprising:
a frame unit (22) supporting a steering unit (6) and a seat (7) disposed rearwards of the steering unit (6),
a drive unit (4) disposed between the steering unit (6) and the seat (7), and
a vehicle body cover (8) including: a top surface section (31) disposed between the steering unit (6) and the seat (7) for covering a top side of the frame unit (22); and a lateral surface section (32, 33) at least partially covering a lateral side of the drive unit (4),
the top surface section (31) of the vehicle body cover (8) includes a plurality of slanted surfaces (41a, 41b, 41c), each of the slanted surfaces slanted for positioning a front portion thereof higher than a rear portion thereof, the slanted surfaces (41a, 41b, 41c) disposed away from each other along a longitudinal direction of a vehicle body, the slanted surfaces (41a, 41b, 41c) forming a single or plurality of air paths (44a, 44b) between every adjacent two of the slanted surfaces (41a, 41b, 41c), the single or plurality of the air paths (44a, 44b) communicating with an inner space enclosed by the vehicle body cover (8),
**characterized in that**
the top surface section (31) of the vehicle body cover (8) includes a first blade (42a; 42b; 42c) extended rearwards over a corresponding one of the slanted surfaces (41a, 41b, 41c), wherein the slanted surfaces (41a, 41b, 41c) are configured so that the air flows upwards and forwards along the slanted surfaces (41a, 41b, 41c).

2. The saddle-ride type vehicle, according to claim 1, further comprising:
a front wheel (2);
a rear wheel (3);
wherein the drive unit (4) is disposed between the front wheel (2) and the rear wheel (3);
wherein the steering unit (6) includes: a front fork (24) supporting the front wheel (2) for allowing the front wheel (2) to rotate; and a handle (26) coupled to a top of the front fork (24);
a head pipe (21) supporting the steering unit (6) for allowing the steering unit (6) to rotate;
wherein the frame unit (22) is connected to the head pipe (21), the frame unit (22) disposed over the drive unit (4).

3. The saddle-ride type vehicle according to claim 1 or 2, wherein the lateral surface section (32, 33) includes an opening (45) positioned lower than the single or plurality of air paths (44a, 44b) in a side view of the vehicle body, the opening (45) communicating with the inner space enclosed by the vehicle body cover (8).

4. The saddle-ride type vehicle according to claim 3,
wherein the vehicle body cover (8) includes: a guide plate (47) disposed inwards of the opening (45); and a second blade (48a, 48b) disposed on an outer surface of the guide plate (47), the second blade (48a, 48b) extended in a vertical direction,
a bottom portion of the guide plate (47) is connected to the lateral surface section (32, 33), and
a top portion of the guide plate (47) is disposed away from the lateral surface section (32, 33).

5. The saddle-ride type vehicle according to claim 3 or 4, wherein the lateral surface section (32, 33) includes a guide portion (51) disposed rearwards of the opening (45), the guide portion (51) extended along a transverse direction of the vehicle body.

6. The saddle-ride type vehicle according to one of claims 3 to 5, wherein the vehicle body cover (8) includes a third blade (49a, 49b, 49c) disposed across the opening (45), the third blade (49a, 49b, 49c) extended along the longitudinal direction of the vehicle body.

7. The saddle-ride type vehicle according to one of claims 3 to 6,
wherein the vehicle body cover (8) includes a first cover component (61) and a second cover component (62) produced as an individual component separated from the first component,
the first cover component (61) includes: a guide plate (47) disposed inwards of the lateral surface section (32, 33), the guide plate (47) opposed to the opening (45), the guide plate (47) including a bottom portion connected to the lateral surface section (32, 33), the guide plate (47) including a top portion disposed away from the lateral surface section (32, 33); a second blade (48a, 48b) disposed along a surface of the guide plate (47), the second blade (48a, 48b) extended in a vertical direction; and a part of the lateral surface section (32, 33), and
the second cover component (62) includes the third blade (49a, 49b, 49c) and another part of the lateral surface section.

8. The saddle-ride type vehicle according to one of claims 3 to 7,
wherein the lateral surface section (32, 33) includes a protruded portion (52) positioned lower than the opening (45), the protruded portion (52) protruded away from a vehicle body center to the outward of the vehicle body cover (8) in a transverse direction of the vehicle body, and
a bottom surface (52b) of the protruded portion (52) is slanted for positioning a rear portion thereof higher than a front portion thereof.

9. The saddle-ride type vehicle according to one of claims 1 to 8, wherein the vehicle body cover (8) includes an aperture (63, 64) in a portion thereof positioned forwards of the single or plurality of the air paths (44a, 44b), the aperture (63, 64) opened to the forward of the vehicle body, the aperture (63, 64) communicating with the inner space enclosed by the vehicle body cover (8).

10. The saddle-ride type vehicle according to one of claims 1 to 9, wherein the lateral surface section (32, 33) includes a mud flap (53) protruded downwards from a bottom surface of the lateral surface section (32, 33), the mud flap (53) extended to a position lower than a bottom portion of the drive unit (4).

11. The saddle-ride type vehicle according to one of claims 1 to 10, wherein the first blade (42a, 42b, 42c) is slanted with respect to the longitudinal direction of the vehicle body for positioning a transversely outward end thereof forwards of a transversely inward end thereof.

12. The saddle-ride type vehicle according to one of claims 1 to 11, wherein the first blade (42a, 42b, 42c) is protruded rearwards from a top end of a corresponding one of the slanted surfaces (41 a, 41 b, 41 c).

13. The saddle-ride type vehicle according to one of claims 1 to 12,
wherein the top surface section (31) of the vehicle body cover (8) further includes a single or plurality of blades (42b, 42c) identical to the first blade (42a), each of the single or plurality of blades extended rearwards over each of the slanted surfaces (41 a, 41 b, 41 c) on a one-to-one basis,
a given one of the first blade (42a) and the blade/blades (42b, 42c) identical thereto is positioned higher than the other or others of the first blade (41a) and the blade/blades (42b, 42c) identical thereto disposed rearwards of the given one of the first blade (42a) and the blade/blades (42b, 42c) identical thereto.

14. The saddle-ride type vehicle according to one of claims 1 to 13, wherein an outlet of each of the single or plurality of the air paths (44a, 44b) to the outside of the vehicle body cover (8) is disposed closer to transversely outward ends of the slanted surfaces (41 a, 41 b, 41 c) than to transversely inward ends of the slanted surfaces (41a, 41b, 41c).

## Patentansprüche

1. Spreizsitz-Fahrzeug, das umfasst:
eine Rahmen-Einheit (22), die eine Lenk-Einheit (6) und einen Sitz (7) trägt, der hinter der Lenk-Einheit (6) angeordnet ist,
eine Antriebs-Einheit (4), die zwischen der Lenk-Einheit (6) und dem Sitz (7) angeordnet ist, und
eine Fahrzeugkörper-Verkleidung (8), die enthält:
einen Oberseiten-Teilabschnitt (31), der zwischen der Lenk-Einheit (6) und dem Sitz (7) angeordnet ist und eine Oberseite der Rahmen-Einheit (22) abdeckt; sowie einen Längsseiten-Teilabschnitt (32, 33), der eine Längsseite der Antriebs-Einheit (4) wenigstens teilweise abdeckt,
wobei der Oberseiten-Teilabschnitt (31) der Fahrzeugkörper-Verkleidung (8) eine Vielzahl geneigter Flächen (41a, 41b, 41c) enthält und jede der geneigten Flächen so geneigt ist, dass ein vorderer Abschnitt derselben höher liegt als ein hinterer Abschnitt derselben, die geneigten Flächen (41 a, 41 b, 41 c) voneinander in einer Längsrichtung eines Fahrzeugkörpers entfernt angeordnet sind, die geneigten Flächen (41a, 41b, 41c) einen einzelnen oder mehrere Luftweg/e (44a, 44b) zwischen jeweils zwei aneinandergrenzenden der geneigten Flächen (41 a, 41 b, 41 c) bilden, der/die einzelne oder mehreren der Luftwege (44a, 44b) mit einem Innenraum in Verbindung stehen, der von der Fahrzeugkörper-Verkleidung (8) umschlossen ist,
**dadurch gekennzeichnet, dass**
der Oberseiten-Teilabschnitt (31) der Fahrzeugkörper-Verkleidung (8) einen ersten Flügel (42a; 42b; 42c) enthält, der sich über eine entsprechende der geneigten Flächen (41 a, 41 b, 41 c) nach hinten erstreckt, wobei die geneigten Flächen (41 a, 41 b, 41 c) so eingerichtet sind, dass die Luft an den geneigten Flächen (41a, 41b, 41c) nach oben und nach vorn strömt.

2. Spreizsitz-Fahrzeug nach Anspruch 1, das des Weiteren umfasst:
ein Vorderrad (2);
ein Hinterrad (3);
wobei die Antriebs-Einheit (4) zwischen dem Vorderrad (2) und dem Hinterrad (3) angeordnet ist;
und die Lenk-Einheit (6) enthält:
eine Vorderradgabel (24), die das Vorderrad (2) so trägt, dass sich das Vorderrad (2) drehen kann; und einen Griff (26), der mit einem oberen Ende der Vorderradgabel (24) gekoppelt ist;
ein Steuerrohr (21), das die Lenk-Einheit (6) so trägt, dass sich die Lenk-Einheit (6) drehen kann;
wobei die Rahmen-Einheit (22) mit dem Steuerrohr (21) verbunden ist und die Rahmen-Einheit (22) über der Antriebs-Einheit (4) angeordnet ist.

3. Spreizsitz-Fahrzeug nach Anspruch 1 oder 2, wobei der Längsseiten-Teilabschnitt (32, 33) eine Öffnung (45) enthält, die in einer Seitenansicht des Fahrzeugkörpers tiefer liegt als der einzelne oder die mehreren Luftweg/e (44a, 44b), und die Öffnung (45) mit dem von der Fahrzeugkörper-Verkleidung (8) umschlossenen Innenraum in Verbindung steht.

4. Spreizsitz-Fahrzeug nach Anspruch 3,
wobei die Fahrzeugkörper-Verkleidung (8) enthält:
eine Führungsplatte (47), die an der Innenseite der Öffnung (45) angeordnet ist, und einen zweiten Flügel (48a, 48b), der an einer Außenfläche der Führungsplatte (47) angeordnet ist, wobei sich der zweite Flügel (48a, 48b) in einer vertikalen Richtung erstreckt,
ein unterer Abschnitt der Führungsplatte (47) mit dem Längsseiten-Teilabschnitt (32, 33) verbunden ist, und
ein oberer Abschnitt der Führungsplatte (47) von dem Längsseiten-Teilabschnitt (32, 33) entfernt angeordnet ist.

5. Spreizsitz-Fahrzeug nach Anspruch 3 oder 4, wobei der Längsseiten-Teilabschnitt (32, 33) einen Führungsabschnitt (51) enthält, der hinter der Öffnung (45) angeordnet ist, und sich der Führungsabschnitt (51) in einer Querrichtung des Fahrzeugkörpers erstreckt.

6. Spreizsitz-Fahrzeug nach einem der Ansprüche 3 bis 5, wobei die Fahrzeugkörper-Verkleidung (8) einen dritten Flügel (49a, 49b, 49c) enthält, der über die Öffnung (45) angeordnet ist, und sich der dritte Flügel (49a, 49b, 49c) in der Längsrichtung des Fahrzeugkörpers erstreckt.

7. Spreizsitz-Fahrzeug nach einem der Ansprüche 3 bis 6,
wobei die Fahrzeugkörper-Verkleidung (8) eine erste Verkleidungs-Komponente (61) und eine zweite Verkleidungs-Komponente (62) enthält, die als eine einzelne Komponente getrennt von der ersten Komponente hergestellt wird,
und die erste Verkleidungs-Komponente (61) enthält:
eine Führungsplatte (47), die an der Innenseite des Längsseiten-Teilabschnitts (32, 33) angeordnet ist, wobei die Führungsplatte (47) der Öffnung (45) gegenüberliegt, die Führungsplatte (47) einen unteren Abschnitt enthält, der mit dem Längsseiten-Teilabschnitt (32, 33) verbunden ist, die Führungsplatte (47) einen oberen Abschnitt enthält, der von dem Längsseiten-Teilabschnitt (32, 33) entfernt angeordnet ist, einen zweiten Flügel (48a, 48b), der an einer Oberfläche der Führungsplatte (47) angeordnet ist, wobei sich der zweite Flügel (48a, 48b) in einer vertikalen Richtung erstreckt, sowie einen Teil des Längsseiten-Teilabschnitts (32, 33), und
die zweite Verkleidungs-Komponente (62) den dritten Flügel (49a, 49b, 49c) und einen anderen Teil des Längsseiten-Teilabschnitts enthält.

8. Spreizsitz-Fahrzeug nach einem der Ansprüche 3 bis 7,
wobei der Längsseiten-Teilabschnitt (32, 33) einen vorstehenden Abschnitt (52) enthält, der tiefer liegt als die Öffnung (45), der vorstehende Abschnitt (52) in einer Querrichtung des Fahrzeugkörpers von einer Mitte des Fahrzeugkörpers zur Außenseite der Fahrzeugkörper-Verkleidung (8) vorsteht, und
eine untere Fläche (52b) des vorstehenden Abschnitts (52) so geneigt ist, dass ein hinterer Abschnitt derselben höher liegt als ein vorderer Abschnitt derselben.

9. Spreizsitz-Fahrzeug nach einem der Ansprüche 1 bis 8, wobei die Fahrzeugkörper-Verkleidung (8) ein Loch (63, 64) in einem Abschnitt derselben enthält, der vor dem einzelnen oder den mehreren der Luftwege (44a, 44b) angeordnet ist, das Loch (63, 64) sich zu der Vorderseite des Fahrzeugkörpers öffnet und das Loch (63, 64) mit dem von der Fahrzeugkörper-Verkleidung (8) umschlossenen Innenraum in Verbindung steht.

10. Spreizsitz-Fahrzeug nach einem der Ansprüche 1 bis 9, wobei der Längsseiten-Teilabschnitt (32, 33) einen Schmutzfänger (53) enthält, der von einer unteren Fläche des Längsseiten-Teilabschnitts (32, 33) nach unten vorsteht, wobei sich der Schmutzfänger (53) zu einer Position erstreckt, die tiefer liegt als ein unterer Abschnitt der Antriebs-Einheit (4).

11. Spreizsitz-Fahrzeug nach einem der Ansprüche 1 bis 10, wobei der erste Flügel (42a, 42b, 42c) in Bezug auf die Längsrichtung des Fahrzeugkörpers so geneigt ist, dass ein in Querrichtung außen liegendes Ende derselben vor einem in Querrichtung innen liegenden Ende desselben angeordnet ist.

12. Spreizsitz-Fahrzeug nach einem der Ansprüche 1 bis 11, wobei der erste Flügel (42a, 42b, 42c) von einem oberen Ende einer entsprechenden der geneigten Flächen (41 a, 41 b, 41 c) nach hinten vorsteht.

13. Spreizsitz-Fahrzeug nach einem der Ansprüche 1 bis 12,
wobei der Oberseiten-Teilabschnitt (31) der Fahrzeugkörper-Verkleidung (8) des Weiteren einen einzelnen oder mehrere Flügel (42b, 42c) enthält, der/die identisch mit dem ersten Flügel (42a) ist/sind, wobei sich jeder von dem einzelnen oder den mehreren Flügel/n jeweils einzeln über jeder der geneigten Flächen (41 a, 41 b, 41 c) nach hinten erstreckt,
ein bestimmter von dem ersten Flügel (42a) und dem/den Flügel/n (42b, 42c), der/die identisch damit ist/sind, höher liegt ist als der andere bzw. die anderen von dem ersten Flügel (41a) und dem/den Flügel/n (42b, 42c), der/die identisch damit ist/sind und hinter dem bestimmten von dem ersten Flügel (42a) und dem/den Flügel/n (42b, 42c) der/die identisch damit ist/sind, angeordnet ist.

14. Spreizsitz-Fahrzeug nach einem der Ansprüche 1 bis 13, wobei ein Auslass jedes von dem einzelnen oder mehreren der Luftwege (44a, 44b) zur Außenseite der Fahrzeugkörper-Verkleidung (8) näher zu den in Querrichtung außenliegenden Enden der geneigten Flächen (41a, 41b, 41c) als zu in Querrichtung innenliegenden Enden der geneigten Flächen (41 a, 41 b, 41 c) angeordnet ist.

## Revendications

1. Véhicule du type à selle comprenant :
une unité de châssis (22) supportant une unité de direction (6) et un siège (7) disposé en arrière de l'unité de direction (6),
une unité motrice (4) disposée entre l'unité de direction (6) et le siège (7), et
un capot de carrosserie de véhicule (8) incluant : une section de surface supérieure (31) disposée entre l'unité de direction (6) et le siège (7) pour recouvrir la face supérieure de l'unité de châssis (22) ; et une section de surface latérale (32, 33) recouvrant au moins partiellement la face latérale de l'unité motrice (4),
la section de surface supérieure (31) du capot de carrosserie de véhicule (8) comporte une pluralité de surfaces inclinées (41a, 41b, 41c), chacune des surfaces inclinées étant inclinée pour positionner sa partie avant plus haute que sa partie arrière, les surfaces inclinées (41a, 41b, 41c) étant disposées à l'écart les unes des autres dans la direction longitudinale de la carrosserie de véhicule, les surfaces inclinées (41a, 41b, 41c) formant un seule ou une pluralité de trajets d'air (44a, 44b) entre deux surfaces adjacentes quelconques des surfaces inclinées (41a, 41b, 41c), l'unique où la pluralité de trajets d'air (44a, 44b) communiquant avec un espace intérieur délimité par le capot de carrosserie de véhicule (8),
**caractérisé en ce que** la section de surface supérieure (31) du capot de carrosserie de véhicule (8) comporte une première ailette (42a; 42b; 42c) s'étendant vers l'arrière au-dessus d'une surface correspondante des surfaces inclinées (41a, 41b, 41c), dans lequel les surfaces inclinées (41a, 41b, 41c) sont configurées de sorte que l'air s'écoule vers le haut et vers l'avant le long des surfaces inclinées (41a, 41b, 41c).

2. Véhicule du type à selle selon la revendication 1, comprenant en outre :
une roue avant (2) ;
une roue arrière (3) ;
dans lequel l'unité motrice (4) est disposée entre la roue avant (2) et la roue arrière (3) ;
dans lequel l'unité de direction (6) comporte : une fourche avant (24) supportant la roue avant (2) pour permettre à la roue avant (2) de tourner ; et une poignée (26) couplée au sommet de la fourche avant (24) ;
un tube de tête (21) supportant l'unité de direction (6) pour permettre à l'unité de direction (6) de tourner ;
dans lequel l'unité de châssis (22) est raccordée au tube de tête (21), l'unité de châssis (22) étant disposée au-dessus de l'unité motrice (4).

3. Véhicule du type à selle selon la revendication 1 ou 2, dans lequel la section de surface latérale (32, 33) comporte une ouverture (45) positionnée plus bas que l'unique ou la pluralité de trajets d'air (44a, 44b) vue de côté de la carrosserie de véhicule, l'ouverture (45) communiquant avec l'espace interne délimité par le capot de carrosserie de véhicule (8).

4. Véhicule du type à selle selon la revendication 3,
dans lequel le capot de carrosserie de véhicule (8) comporte : une plaque de guidage (47) disposée vers l'intérieur de l'ouverture (45) ; et une deuxième ailette (48a, 48b) disposée sur la surface externe de la plaque de guidage (47), la deuxième ailette (48a, 48b) s'étendant dans la direction verticale,
la partie inférieure de la plaque de guidage (47) est relié à la section de surface latérale (32, 33), et
la partie supérieure de la plaque de guidage (47) est disposée à l'écart de la section de surface latérale (32, 33).

5. Véhicule du type à selle selon la revendication 3 ou 4, dans lequel la section de surface latérale (32, 33) comporte une partie de guidage (51) disposée en arrière de l'ouverture (45), la partie de guidage (51) s'étendant dans la direction transversale de la carrosserie de véhicule.

6. Véhicule du type à selle selon l'une des revendications 3 à 5, dans lequel le capot de carrosserie de véhicule (8) comporte une troisième ailette (49a, 49b, 49c) disposée en travers de l'ouverture (45), la troisième ailette (49a, 49b, 49c) s'étendant dans la direction longitudinale de la carrosserie de véhicule.

7. Véhicule du type à selle selon l'une des revendications 3 à 6,
dans lequel le capot de carrosserie de véhicule (8) comporte un premier composant de recouvrement (61) et un second composant de recouvrement (62) fabriqué en tant que composant individuel séparé du premier composant,
le premier composant de recouvrement (61) comporte : une plaque de guidage (47) disposée vers l'intérieur de la section de surface latérale (32, 33), la plaque de guidage (47) étant opposée à l'ouverture (45), la plaque de guidage (47) incluant une partie inférieure reliée à la section de surface latérale (32, 33), la plaque de guidage (47) incluant une partie supérieure disposée à l'écart de la section de surface latérale (32, 33) ; une deuxième ailette (48a, 48b) disposée sur une surface de la plaque de guidage (47) la deuxième ailette (48a, 48b) s'étendant dans la direction verticale ; et une partie de la section de surface latérale (32, 33), et
le second composant de recouvrement (62) comporte la troisième ailette (49a, 49b, 49c) et une autre partie de la section de surface latérale.

8. Véhicule du type à selle selon l'une des revendications 3 à 7,
dans lequel la section de surface latérale (32, 33) comporte une partie en saillie (52) positionnée plus bas que l'ouverture (45), la partie en saillie (52) faisant saillie en s'éloignant du centre de la carrosserie de véhicule vers l'extérieur du capot de carrosserie de véhicule (8) dans la direction transversale de la carrosserie de véhicule, et
la surface inférieure (52b) de la partie en saillie (52) est inclinée pour positionner sa partie arrière plus haute que sa partie avant.

9. Véhicule du type à selle selon l'une des revendications 1 à 8, dans lequel le capot de carrosserie de véhicule (8) comporte une ouverture (63, 64) dans une partie de celui-ci positionnée en avant de l'unique ou de la pluralité de trajets d'air (44a, 44b), l'ouverture (63, 64) étant ouverte vers l'avant de la carrosserie de véhicule, l'ouverture (63, 64) communiquant avec l'espace interne délimité par le capot de carrosserie de véhicule (8).

10. Véhicule du type à selle selon l'une des revendications 1 à 9, dans lequel la section de surface latérale (32, 33) comporte une bavette (53) faisant saillie vers le bas depuis la surface inférieure de la section de surface latérale (32, 33), la bavette (53) s'étendant vers une position plus basse que la partie inférieure de l'unité motrice (4).

11. Véhicule du type à selle selon l'une des revendications 1 à 10, dans lequel la première ailette (42a, 42b, 42c) est inclinée par rapport à la direction longitudinale de la carrosserie de véhicule pour positionner son extrémité transversalement vers l'extérieur en avant de son extrémité transversalement vers l'intérieur.

12. Véhicule du type à selle selon l'une des revendications 1 à 11, dans lequel la première ailette (42a, 42b, 42c) fait saillie vers l'arrière depuis l'extrémité supérieure d'une surface correspondante des surfaces inclinées (41a, 41b, 41c).

13. Véhicule du type à selle selon l'une des revendications 1 à 12,
dans lequel la section de surface supérieure (31) du capot de carrosserie de véhicule (8) comporte en outre une seule ou une pluralité d'ailettes (42b, 42c) identiques à la première ailette (42a) chacune de la seule ou de la pluralité d'ailettes s'étendant vers l'arrière au-dessus de chacune des surfaces inclinées (41a, 41b, 41c) de façon biunivoque,
une ailette donnée de la première ailette (42a) et de la ou des ailettes (42b, 42c) identiques à celle-ci est positionnée plus haute que l'autre ou les autres de la première ailette (41a) et la ou les ailettes (42b, 42c) identiques à celle-ci disposées en arrière de l'ailette donnée de la première ailette (42a) et de la ou des ailettes (42b, 42c) identiques à celle-ci.

14. Véhicule du type à selle selon l'une des revendications 1 à 13, dans lequel la sortie de chaque trajet de l'unique ou de la pluralité de trajets d'air (44a, 44b) vers l'extérieur du capot de carrosserie de véhicule (8) est disposée plus près des extrémités transversalement vers l'extérieur des surfaces inclinées (41a, 41b, 41c) que des extrémités transversalement vers l'intérieur des surfaces inclinées (41a, 41b, 41c).
